# EUROPEAN PATENT SPECIFICATION

(11) **EP 2 853 420 B1**
(45) Date of publication and mention of the grant of the patent: **21.10.2020**
(21) Application number: 14184388.8
(22) Date of filing: 11.09.2014
(51) Int. Cl.: B60C 23/12

(54) **Tire and valve assembly**
Reifen und Ventilanordnung
Ensemble valve et pneu

(30) Priority: 30.09.2013 US 201314041490
(43) Date of publication of application: 01.04.2015
(73) Proprietor: The Goodyear Tire & Rubber Company, Akron, Ohio 44316 (US)
(72) Inventor: Lin, Cheng-Hsiung, Hudson, OH 44236 (US); Middelberg, Jason Mark, 4112 Napier (NZ)
(74) Representative: Kutsch, Bernd

(56) References cited:
- EP-A1- 2 565 061
- EP-A1- 2 687 384

## Description

### Field of the Invention

The present invention relates generally to tires or air maintenance tires and, more specifically, to a shut-off valve assembly for a tire or air maintenance tire.

### Background of the Invention

Normal air diffusion reduces tire pressure over time. Hence, the usual state of tires is underinflated. Accordingly, drivers must repeatedly act to maintain tire pressures or they will see reduced fuel economy, tire life, and/or reduced vehicle braking and handling performance. Tire Pressure Monitoring Systems have been proposed to warn drivers when tire pressure is significantly low. Such systems, however, remain dependant upon the driver taking remedial action when warned to re-inflate a tire to the recommended pressure. It is a desirable, therefore, to incorporate an air maintenance feature within a pneumatic tire that will maintain correct air pressure within the tire without a need for driver intervention to compensate for any reduction in tire pressure over time.

EP-A-2 565 061 describes a self-inflating tire and pressure regulator device in accordance with the preamble of claim 1.

A further self-inflating tire is known from late published EP-A-2 687 384. This tire comprises a pair of inlet valves positioned on respective opposite sides of an inlet junction and a pair of outlet valves positioned at a downstream side of a respective inline valve.

### Summary of the Invention

The invention relates to a tire and pump assembly in accordance with claim 1.

Dependent claims refer to preferred embodiments of the invention.

The shut-off valve is preferably a high-pressure shut-off valve. In a preferred aspect of the invention, an air maintenance tire and pump assembly in includes a tire or pneumatic tire, an elongate, prefeably substantially annular air passageway, an air inlet port assembly, a pair of substantially inline valves, a pair of outlet valves, and a high pressure shut-off valve. The tire has a tire cavity and first and second sidewalls extending from first and second tire bead regions, respectively, to a tire tread region. The elongate substantially annular air passageway is enclosed within a bending region of the sidewalls, the air passageway operatively closing and opening, segment by segment, as the bending region of the sidewalls passes adjacent a rolling tire footprint to pump air along the air passageway. The air inlet port assembly is coupled to, and in air flow communication with, the air passageway at an inlet air passageway junction, the air inlet port assembly being operable to channel inlet air from outside of the tire into the air passageway. The pair of substantially inline valves are positioned on respective opposite sides of the inlet air passageway junction in air flow communication with the inlet port assembly, the inline valves selectively opening in respective opposite directions and passing a flow of the inlet air from an upstream valve side to a downstream valve side and into the air passageway. The pair of outlet valves each are positioned in air flow communication with a downstream side of a respective inline valve, the valves selectively conducting a flow of the inlet air from the downstream side of a respective inline valve to the tire cavity. The preferably high pressure shut-off valve prevents an over-inflation condition in the tire cavity.

According to another preferred aspect of the present invention, the high pressure shut-off valve includes a diaphragm for sealing the high pressure shut-off valve when the tire cavity pressure is higher than a pre-set maximum tire pressure.

According to still another preferred aspect of the present invention, the high pressure shut-off valve includes a spring for sealing the high pressure shut-off valve when the tire cavity pressure is higher than a pre-set maximum tire pressure.

According to yet another preferred aspect of the present invention, the high pressure shut-off valve is located in an inlet conduit adjacent a filter for inlet air.

According to still another preferred aspect of the present invention, the high pressure shut-off valve is located in an inlet conduit for the pump assembly.

According to another preferred aspect for use with the present invention, a pump assembly includes an elongate annular air passageway enclosed within a bending region of a tire, the air passageway operatively closing and opening segment by segment as the bending region of the tire passes through a rolling tire footprint to pump air along the air passageway. The pump assembly further includes an air inlet port assembly coupled to channel outside air into the air passageway at an inlet junction; a pair of inline valves positioned to direct a flow of the inlet air in opposite directions into the air passageway; and a pair of outlet valves, each positioned at a downstream side of a respective inline valve, the outlet valves directing a bi-directional flow of the inlet air from the downstream side of a respective inline valve toward the tire cavity.

In another preferred aspect for use with the present invention, the inlet port assembly includes a control conduit extending between and conducting an inlet air flow between the air inlet portal and an upstream side of the inline valves, and a valve actuator for interrupting the inlet air flow through the control conduit to the inline valves when the air pressure within the tire cavity is above the threshold air pressure level.

In another preferred aspect for use with the present invention, a valve actuator piston is seated within a valve housing cavity, the control conduit transversely extending across the piston and reciprocally moving with the piston between the closed, misaligned orientation with the upstream sides of the inline valves and an open, aligned orientation with the upstream sides of the inline valves.

In another preferred aspect for use with the present invention, the inline and the outlet valves are selectively opened by bi-directional air flow within the air passageway and wherein the direction of bi-directional air flow is dictated the forward and reverse directions in which the tire rotates.

### Definitions

"Axial" and "axially" means lines or directions that are parallel to the axis of rotation of the tire.

"Ball check valve" is a check valve in which the closing member, the movable part to block the air flow, is a spherical ball. In some ball check valves, the ball is spring-loaded to help keep it shut and require a specified magnitude of upstream pressure on the ball to overcome the bias of the valve spring for the valve to open. The interior surface of the main seats of ball check valves may be conically-tapered to guide the ball into the seat and form a positive seal when stopping reverse flow.

"Chafer" is a narrow strip of material placed around the outside of a tire bead to protect the cord plies from wearing and cutting against the rim and distribute the flexing above the rim.

"Check valve" is a two-port valve having two openings in the body, one for air to enter and the other for air to leave.

"Circumferential" means lines or directions extending along the perimeter of the surface of the annular tread perpendicular to the axial direction.

"Cracking pressure" is the minimum upstream pressure at which the valve will operate. Typically, a check valve is designed for and can therefore be specified for a specific cracking pressure.

"Downstream" is a direction away from the source of power, i.e. the direction away from the source of air flow. In the context of a valve, "downstream" refers to a side of the valve from which air flows out of the valve when an "upstream" air flow on the valve exerts cracking pressure sufficient to open the valve.

"Equatorial Centerplane (CP)" means the plane perpendicular to the tire's axis of rotation and passing through the center of the tread.

"Footprint" means the contact patch or area of contact of the tire tread with a flat surface at zero speed and under normal load and pressure.

"Lateral" means an axial direction.

"Lateral edges" means a line tangent to the axially outermost tread contact patch or footprint as measured under normal load and tire inflation, the lines being parallel to the equatorial centerplane.

"Net contact area" means the total area of ground contacting tread elements between the lateral edges around the entire circumference of the tread divided by the gross area of the entire tread between the lateral edges.

"Outboard side" means the side of the tire farthest away from the vehicle when the tire is mounted on a wheel and the wheel is mounted on the vehicle.

"Peristaltic" means operating by means of wave-like contractions that propel contained matter, such as air, along tubular pathways.

"Radial" and "radially" means directions radially toward or away from the axis of rotation of the tire.

"Upstream" is a direction toward the source of air flow power, i.e. the direction from which air flows or is coming from. In the context of a valve, "upstream" refers to a side of the valve into which air flows when an "upstream" air flow on the valve exerts cracking pressure sufficient to open the valve.

### Brief Description of the Drawings

The present invention will be described by way of example and with reference to the accompanying drawings, in which:
FIG. 1 is an isometric view of tire, rim and tubing with an example peristaltic pump and inlet valve for use with the present invention.
FIG. 2A is a side view of the tire and example peristaltic pump assembly of FIG. 1 with the tire rotating counterclockwise and establishing a footprint against a ground surface.
FIG. 2B is a side view of the tire and example peristaltic pump assembly of FIG. 1 with the tire rotating clockwise against a ground surface.
FIG. 3A is a cross sectional schematic diagram of the inlet portal of the example peristaltic pump of FIG. 1 having a two-port inlet control valve in the closed position.
FIG. 3B is a cross sectional schematic diagram of the inlet portal of the example peristaltic pump of FIG. 1 having a two-port inlet control valve in the open position operable to fill the tire with the tire rotating in a counter clockwise direction.
FIG. 3C is a cross-sectional schematic diagram of the inlet portal of the example peristaltic pump of FIG. 1 with the bi-directional valve having two-port inlet control which fills the tire with the tire rotating in a clockwise direction.
FIG. 4A is a cross sectional schematic diagram of the inlet portal of the example peristaltic pump of FIG. 1 having an alternatively configured bi-directional five-port inlet control valve in the closed position.
FIG. 4B is a cross sectional schematic diagram of the inlet portal of the example peristaltic pump of FIG. 1 having an alternatively configured bi-directional five-port inlet control valve shown in the open position operable to fill the tire with the tire rotating in a counter clockwise direction.
FIG. 4C is a cross-sectional schematic diagram of the inlet portal of the example peristaltic pump of FIG. 1 with the bi-directional valve having an alternatively configured five-port inlet control which fills the tire with tire rotating in a clockwise tire rotation.
FIG. 5A is a cross-sectional schematic diagram of the inlet portal of an alternative example peristaltic pump bi-directional valve filling a tire with the tire in a counter-clockwise rotation in which the valve has incorporated therein a five port regulator.
FIG. 5B is a cross-sectional schematic diagram of the inlet portal of the FIG. 5A alternative example peristaltic pump bi-directional valve filling a tire with the tire in a clockwise rotation and showing the five port regulator.
FIG. 5C is a cross-sectional schematic diagram of the inlet portal of the FIG. 5B alternative example peristaltic pump bi-directional valve with clockwise tire rotation and the valve in a bypass mode.
FIG. 5D is a cross-sectional schematic diagram of the inlet portal of the FIG. 5B alternative example peristaltic pump bi-directional valve with counter-clockwise tire rotation and the valve in a bypass mode.
FIG. 6 is a cross sectional schematic diagram similar to FIG. 3A with two alternate locations for a high pressure shut-off valve in accordance with the present invention.
FIG. 7 is a cross sectional schematic diagram similar to FIG. 4A with a high pressure shut-off valve in accordance with the present invention.
FIG. 8 is a cross sectional schematic diagram similar to FIG. 5A with a high pressure shut-off valve in accordance with the present invention.

### Detailed Description of Example Embodiments

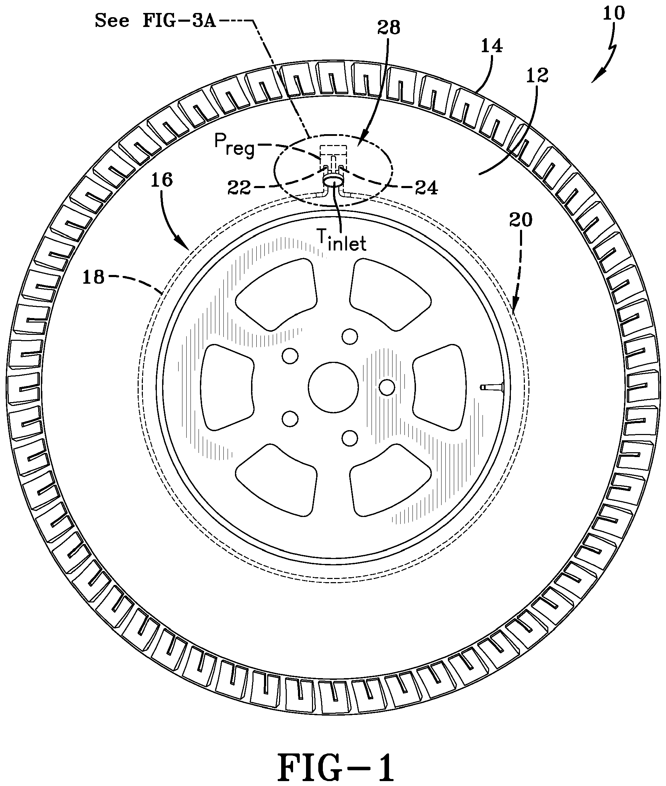

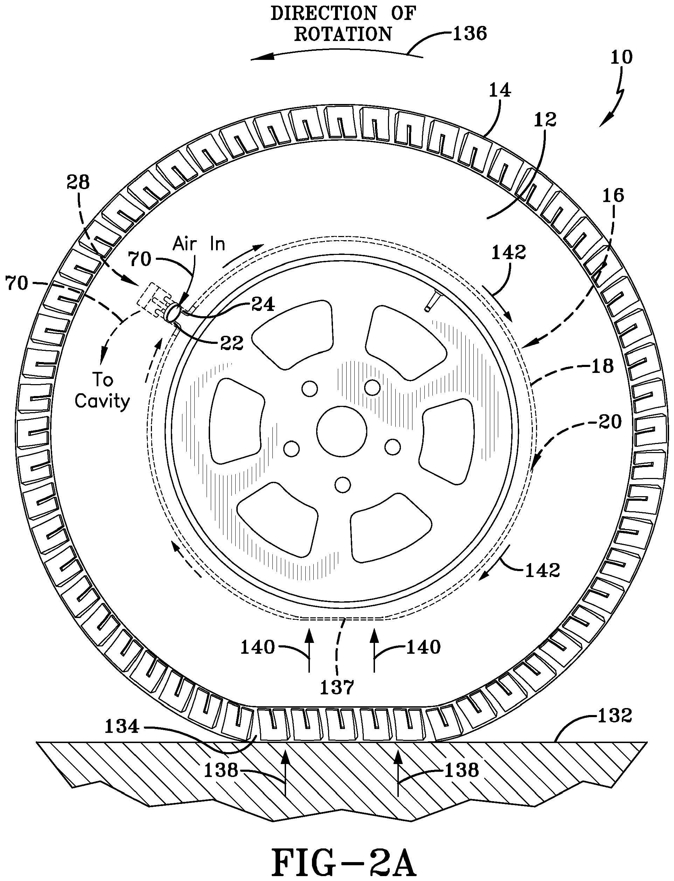

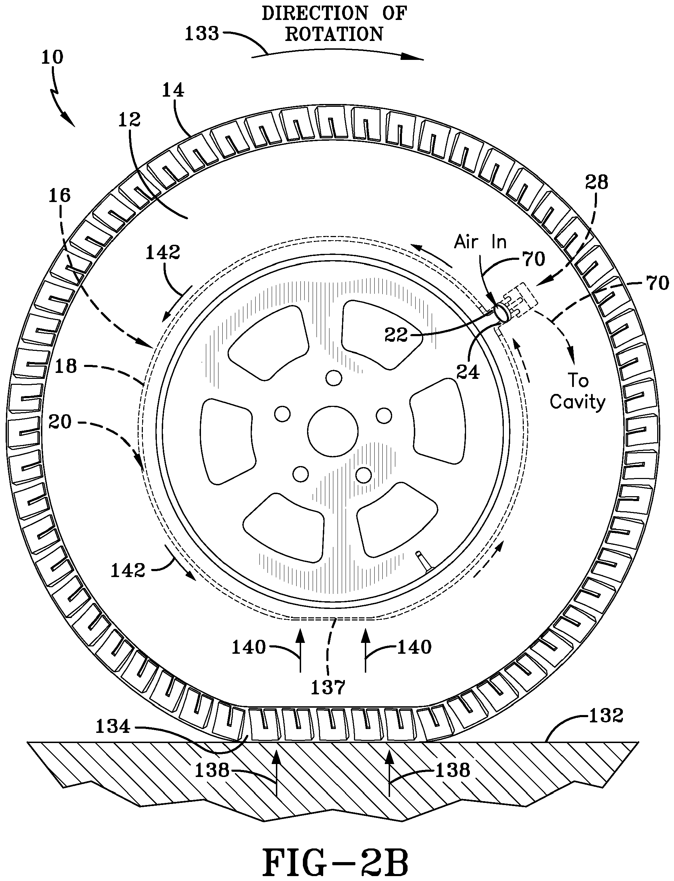

Referring to FIGS. 1, 2A and 2B, a pneumatic tire and pump assembly includes a pair of sidewalls 12 extending to a tread 14 and enclosing a tire air cavity 26 defined by an innerliner 25. A peristaltic pump assembly 16 is attached to or incorporated into one or both of the sidewalls 12 in a generally high bend region of the sidewall(s). The peristaltic pump assembly 16 includes a preferably annular air passageway 20 which may be either 1) in the form of an independent tube formed separately from the tire and assembled with the tire in a post-manufacture procedure; or 2) an air passageway formed as an integral void within the sidewall(s) 12 during tire manufacturing. The air passageway 20 is preferably enclosed by the sidewall 12 and preferably extends along an annular path about a region of the sidewall that experiences a high flex or bend as the pneumatic tire rotates under load. If in an independent tube form, the tube may be formed of a resilient, flexible material, such as plastic, rubber, and/or polymer compounds capable of withstanding repeated cyclic deformation, with the tube deforming into a flattened condition subject to a load and, upon removal of such load, returning to an original condition generally circular in cross-section. If the air passageway is integrally formed within the sidewall, the air passageway likewise withstands repeated cyclic deformation and recovery as the tire rotates under load and operatively passes a volume of air sufficient for the purpose described herein. The general operation of an air tube in a peristaltic pump is described in US-B1-8,113,254.

Opposite ends 22, 24 of the air passageway 20 may terminate at an inlet port assembly 28. The inlet port assembly 28 may be affixed to rotate with the tire as the tire rotates against a ground surface 132. Rotation of the tire creates a footprint 134 against the ground surface 132, which in turn introduces compression force 138 into the pneumatic tire. The compression force 138 in turn may be applied at 140 into the air passageway 20 causing segment by segment collapse of the passageway as the tire rotates under load. The segment by segment collapse of the air passageway 20 may occur whether the tire rotates in a counterclockwise direction 136 in FIG. 2A or a clockwise direction 133 in FIG. 2B. The peristaltic pump assembly 16 is thus bi-directional or reversible in operating to pump air into the tire cavity 26 in both a forward or a reverse direction of air flow continuously throughout a 360 degree tire rotation.

As the tire rotates in both forward and rearward directions136, 133 in FIG. 2A or 2B, respectively, the air passageway 20 is flattened segment by segment whether the passageway is in the form of a separate sidewall embedded tube or an integrally formed void. The segment by segment sequential flattening 137 of the air passageway 20 may move in a direction 142 opposite to the direction of tire rotation in FIGS. 2A and/or 2B. The sequential flattening 137 of the passageway 20, segment by segment, evacuates air from the flattened segments to be pumped in the direction 142 toward the inlet port assembly 28 where the air is directed to the tire cavity 26. Air pressure within the tire cavity 26 may thus be maintained at a desired threshold pressure. Air admitted by the inlet port assembly 28 into the air passageway 20 may replenish air pumped into the tire cavity 26 or be recirculated out of the pump assembly 16, if not needed to maintain tire pressure at the desired level.

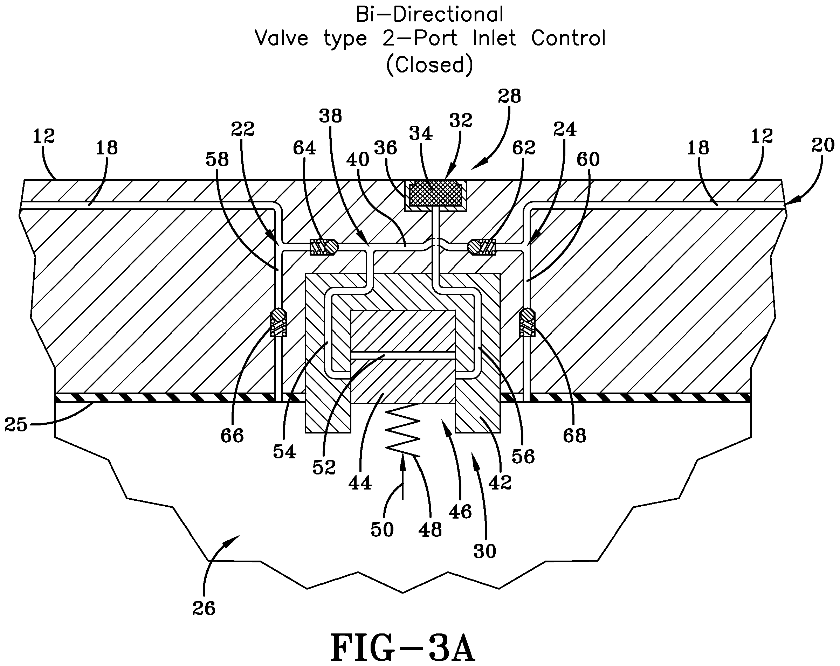

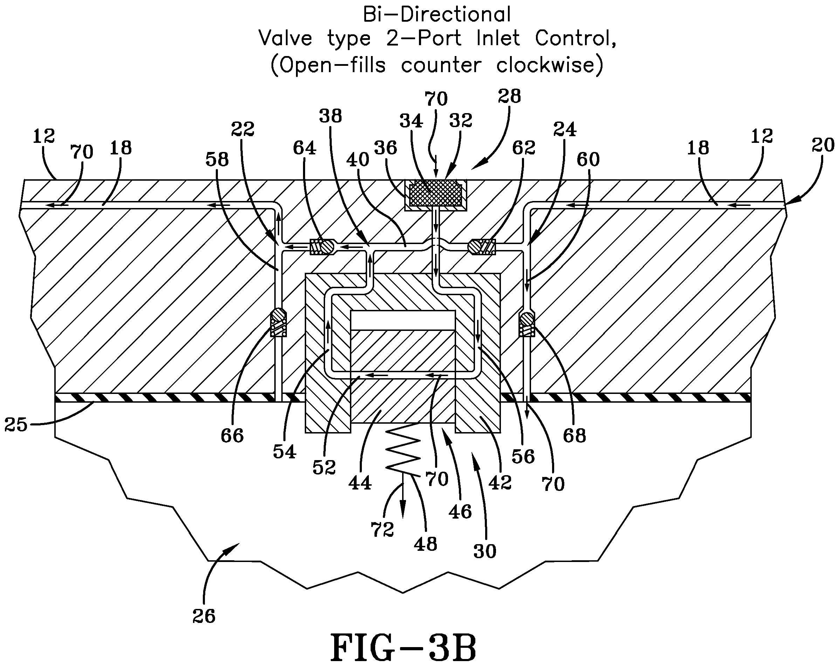

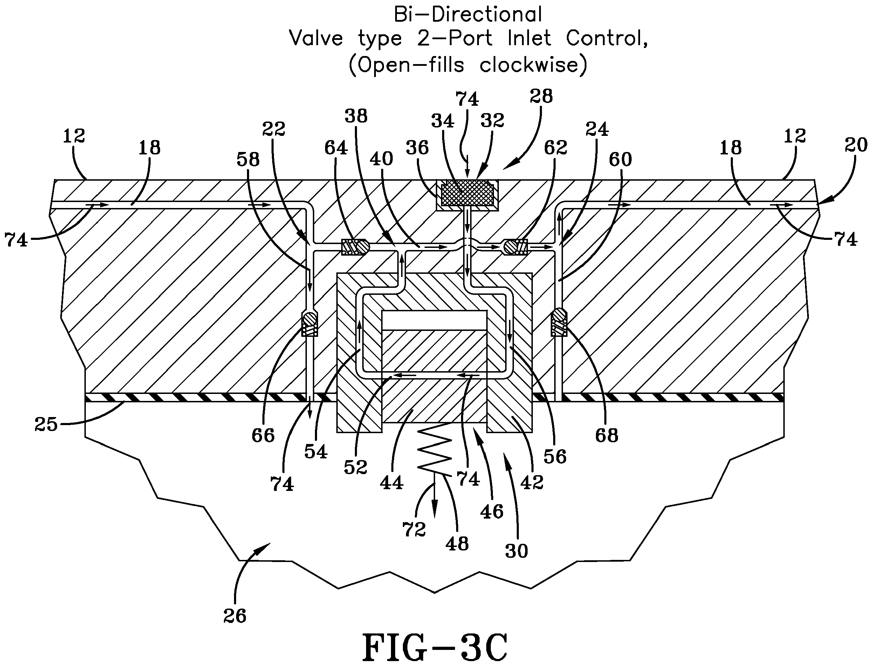

The inlet port assembly 28 preferably includes a regulator valve assembly 30 and a filtered air entry port 32. A two port, bi-directional inlet control assembly 28 is shown in FIGS. 3A through 3C. FIG. 3A represents Inlet Control in a closed position; FIG. 3B represents Inlet Control in an open position with air flow moving counter-clockwise and the tire rotating clockwise; and FIG. 3C represents Inlet Control in an open position with air flow moving clockwise and the tire rotating counter-clockwise. It may be appreciated that the system is bi-directional, with air flow within the air passageway 20 in one and/or two directions as the tire rotates under load, with the direction of air flow within the air passageway 20 determined by a forward or reverse direction of tire rotation. Pumping along the air passageway 20 may occur in either direction, alternatively, throughout an entire 360 degree rotation of the pneumatic tire under load.

Preferably, a filtered air entry port 32 is positioned at the outer surface of a tire sidewall 12 and outside air may be admitted into the entry port through a cellular filter 34 housed within a cylindrical housing 36. FIG. 3A shows the assembly 28 in a closed condition in which air from outside the tire is prevented from passing through the entry port 32 (e.g., a condition occurring when the pressure within the tire cavity 26 is at or above a regulated pressure threshold P_{REG}). An air passageway conduit 56 extends from the filter housing 36 to the regulator valve assembly 30 and conduct inlet air to the valve assembly. From the regulator valve assembly 30, an outlet conduit 54 carries air flow to a connecting conduit 40 which conducts air into oppositely directed valves 62, 64 positioned adjacent and on opposite sides of an inlet junction 38. As used herein, "inlet junction" refers to a location in the air passageway 20 conducting inlet air from the assembly 28 to upstream sides of inline stop valves. Alternative examples of the system 16 are shown in FIGS. 3A through 3C, 4A through 4C, and 5A through 5D.

The regulator valve assembly 30 preferably has a valve housing 42 and a valve piston 44 residing within a cylinder or housing chamber 46. A biasing mechanism, such as a spring 48, may exert a biasing force (see arrow 72 in FIGS. 3B, 3C) on the piston 44, biasing the piston downward within cylinder 46 into an "open" or "tire-fill" location as indicated in FIGS. 3B & 3C. When the pressure within the tire cavity 26 is at or greater than the pressure setting level P_{REG}, the pressure will overcome the biasing force of the spring 48 and force (see arrow 50) the piston 44 upward within the cylinder 46 into the "closed" or "no-fill" location of FIG. 3A. The piston 44 may include a transversely extending air conduit 52 extending across the piston 44. In the "closed" position of FIG. 3A, the conduit 52 is misaligned with respect to the air conduits 54, 56 and air cannot flow across the piston 44 to conduits 54, 56, and from there to the inlet junction 38. In the "closed" position, consequently, air flow is prevented from reaching the inlet junction 38 and from reaching the upstream sides of the valves 62, 64. Air flow into the passageway 20 may thus be precluded with the valve assembly 30 in the closed position of FIG. 3A.

FIG. 3B shows the valve assembly 30 moving to an "open" position. The pneumatic tire may rotate in a clockwise direction, causing air to be pumped along passageway 20 in a counter clockwise direction. A configuration of four one-way valves 62, 64, 66, 68 may be located as shown in FIG. 3B. Two inline valves 62, 64 may be positioned along the conduit 40 on the opposite side of the inlet junction 38. The two inline valves 62, 64 open in opposite directions along the conduit 40 and conduct air flow in such respective directions with toward the two inline valves 62, 64 in an open condition. The conduit 40 connects at the downstream side of the valves 62, 64 with the air passageway 20. From the juncture of the conduit 40 and the air passageway 20, radially extending outlet conduit passageways 58, 60 extend to the tire cavity 26. Positioned along the conduits 58, 60 may be two outlet one-way valves 66, 68, respectively. The valves 66, 68 may be oriented to open in a direction toward the tire cavity 26 to permit the flow of air through the valves 66, 68, along conduits 58, 60, and into the tire cavity.

The one-way valves 62, 64, 66, 68 may be ball or diaphragm check valves, for example. The valves 62, 64, 66, 68 may be oriented to open in the direction shown when pressure at an upstream side of the valve 62, 64, 66, or 68 overcomes a biasing spring and forces the ball away from its seat. The piston 44 may move downward (as seen in the FIGS.) under the biasing force exerted by actuator spring 48. When the air pressure, P_{REG}, within the tire cavity 26 falls below a desired pressure threshold limit, movement of the piston 44 aligns the air conduit 52 across the piston 44 with the conduits 54, 56 thereby allowing inlet air from the inlet filter port 32 to flow across the piston conduit 52 to the inlet control junction 38 and to the connecting conduit 40. The tire, in rotating clockwise against the ground surface 132 (See FIG. 2B), collapses the air passageway 20 segment by segment opposite the created tire footprint 134. The collapsed segments create a vacuum which, in turn, may be refilled segment by segment by a flow of air within the air passageway 20 in a counterclockwise direction 142, drawn in through the inlet port assembly 28.

The counterclockwise flow of input air opens the one-way valve 64, allowing the air to flow into the passageway 20 and circulate in the counterclockwise direction. When the air flow reaches the junction of the conduit 40 and the radial outlet conduit 60, the air cannot flow through the closed valve 62 and must, therefore, flow to the outlet valve 68. The air flow forces the outlet valve 68 open and continues on allow air into the tire cavity 26 as indicated by the arrow 70 (FIG. 3B). When air pressure within the tire cavity 26 reaches the desired preset level, tire pressure against the piston 44 may force the piston into the closed position of FIG. 3A and air flow to the tire cavity may be discontinued (as described above).

This operation of the peristaltic pump assembly 16 may also operate similarly in the reverse tire rotation direction, as will be understood from FIG. 3C. In FIGS. 2A and 3C, with the tire rotating in the counterclockwise direction, air may be pumped in the clockwise direction 142. FIG. 3C shows the inlet port assembly 28 and the regulator valve assembly 30 in such a condition. If pressure within the tire cavity 26 is below the preset P_{REG}, the piston 44 is biased by the spring 48 into the open position. The piston conduit 52 may align with the conduits 54, 56 and the air flow may be directed to the junction 40. Rotation of the tire in the counterclockwise direction may cause the air to flow in the clockwise direction 74 as evacuated segments of the passageway 20 are refilled. The air flow in the clockwise direction opens the one way valve 62 and allows air to circulate from the conduit 40 into the passageway 20. The pressurized air may circulate in the passageway 20 and enter the conduit 58 where it is directed against the outlet valve 66, thereby flowing through the outlet valve 66 to the tire cavity 26 as indicated by arrow 70 of FIG. 3C. As in FIG. 3C, when the air flow reaches the juncture of the conduit 40 and the radial outlet conduit 58, air cannot flow through the closed valve 64 and may flow to the outlet valve 66. The air flow that forces the outlet valve 66 open may continue into the tire cavity 26, as indicated by the arrow 70. When air pressure within the tire cavity 26 reaches the desired preset level P_{REG}, tire pressure against the face of the piston 44 may force the piston into the closed position of FIG. 3A and air flow to the tire cavity may be discontinued, as explained above.

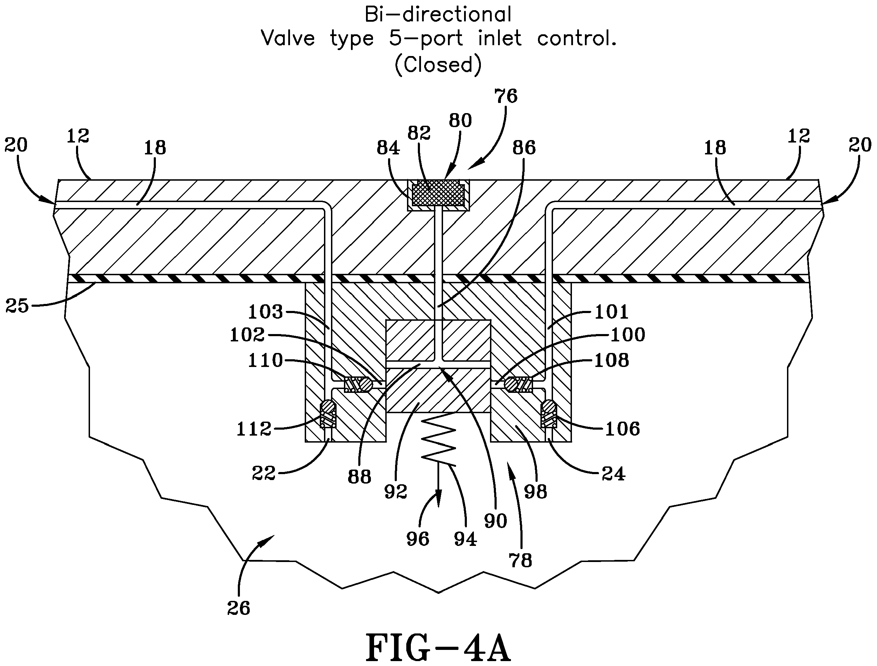

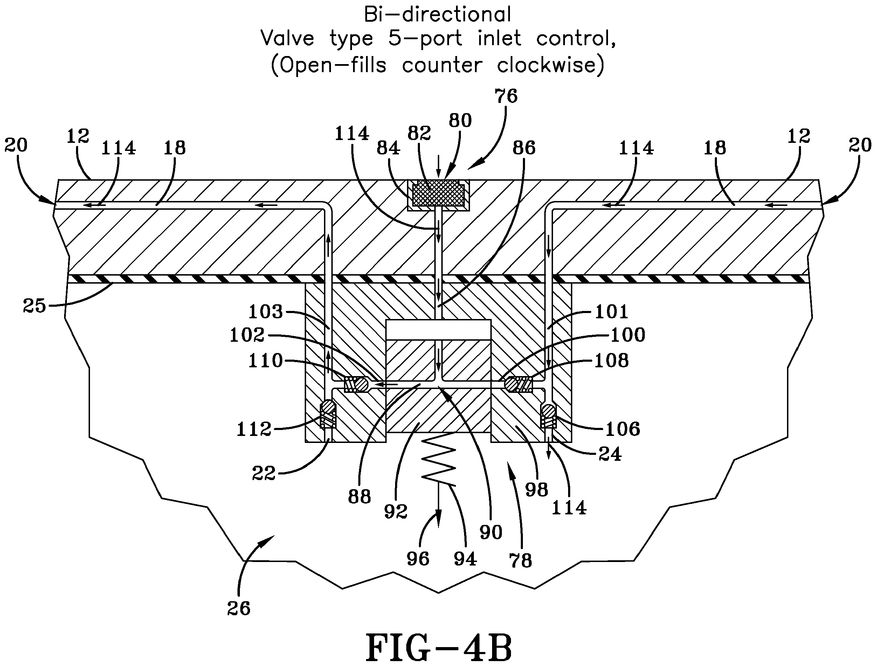

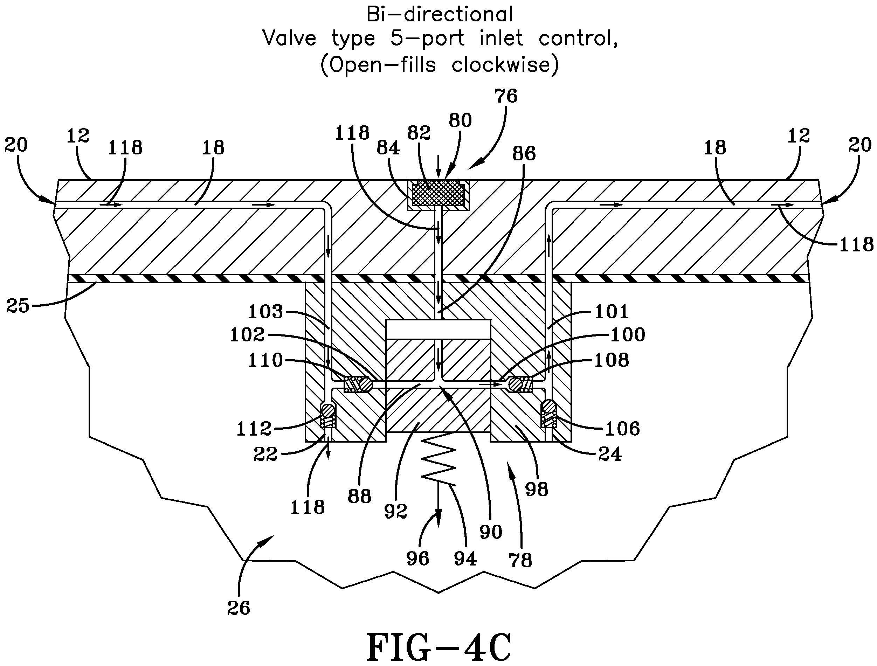

FIGS. 4A, 4B & 4C show an alternative example embodiment in which the regulator valve assembly 78 may be a 5-port inlet control configuration. In FIG. 4A, the valve assembly is in the closed position in which air is not input into the tire cavity 26. FIG. 4B shows the valve assembly in the open position with a clockwise tire rotational direction and air flow in the counter clockwise direction. FIG. 4C shows the valve in the open position during a counterclockwise tire rotational direction and air flow in the clockwise direction. In the valve assembly shown in FIGS. 4A, 4B & 4C, air may be admitted into the system through the inlet port assembly 76 to the regulator valve assembly 78. The inlet port assembly 76 may include a filter inlet port 80 and a filter body 82 housed within a filter housing 84. Air passing through the filter body 82 may be directed via the inlet conduit 86 to a transverse piston conduit 88. The junction 90 created by the intersection of the inlet conduit 86 and the piston conduit 88 may also be located within the piston 92.

The piston 92 may be biased by the spring 94 in an open condition represented by FIGS. 4B & 4C with the air pressure within the tire cavity 26 being less than a preset P_{REG} level. If air pressure within the tire cavity 26 is at or above the P_{REG} level, the cavity air pressure may overcome the biasing spring 94 and move the piston 92 upward within the cylinder 98 into the closed position of FIG. 4A. In the closed position, no air is pumped into the tire cavity 26.

The transverse conduit 88 of the piston 92 may align with the bridging conduits 100, 102 in the open-valve conditions of FIGS. 4B & 4C and may misalign with the bridging conduits 100, 102 when the valve is closed as shown in FIG. 4A. Four one-way valves 106, 108, 110, 112 may be positioned to form inline valves 108, 110 and outlet valves 106, 112. The inline valves 108, 110 may open in opposite directions away from the junction 90 and the outlet valves 112, 106 may open radially inward toward the tire cavity 26. The outlet valves 106, 112 may reside within the outlet conduits 103, 101, respectively, which couple to the passageway 20. The conduits 103, 101 may intersect and connect with the bridging conduits 102, 100, respectively, and continue radially inward beyond the outlet valves 112, 106 to the exit ends 22, 24 at the tire cavity 26.

Operation of the five port valve configuration of FIGS. 4A, 4B & 4C is preferably analogously as explained above in regard to the two-port valve of FIGS. 3A, 3B & 3C. FIGS. 2B, 4B show the regulator valve open with the tire rotating clockwise and causing a counterclockwise flow of air within the passageway 20. Air admitted through the input valve assembly 76 may be directed to the junction 90 in the piston 92 by means of the conduit 86. At the junction 90, the air flow cannot pass through the closed valve 108 and thereby may open the valve 110. The air flow may circulate in the direction 114 within the passageway 20 to enter the conduit 101. Air flow at the junction of conduit 101 and the bridging conduit 100 cannot pass through the closed valve 108 and thus may be directed to the open valve 106, allowing the pumped air flow to enter the tire cavity 26.

FIGS. 2A & 4C show operation of the regulator valve with the tire rotating in a counterclockwise direction 136 to pump airflow within the passageway 20 in a clockwise fill direction 118. Air flow 118 in the passageway 20 may be directed to the tire cavity 26 as shown. Operation of the valve in this tire rotation direction and counter air flow direction in FIGS. 2A & 4C may proceed as described above. When air pressure within the tire cavity 26 reaches the desired preset level P_{REG}, tire pressure against the piston 92 may force the piston into the closed (conduit-misaligned) position of FIG. 3A and air flow to the tire cavity may be discontinued. A pressure within the tire cavity 26 below the preset desired threshold level P_{REG} may cause the piston 92 to move into the open position of FIGS. 4B & 4C and air to flow in the passageway 20 in the direction indicated as dictated by the direction of tire rotation. Pumping of air may continue throughout the 360 degree rotation of the tire and, as shown, may occur regardless of whether the tire (and vehicle) is going in forward or reverse directions.

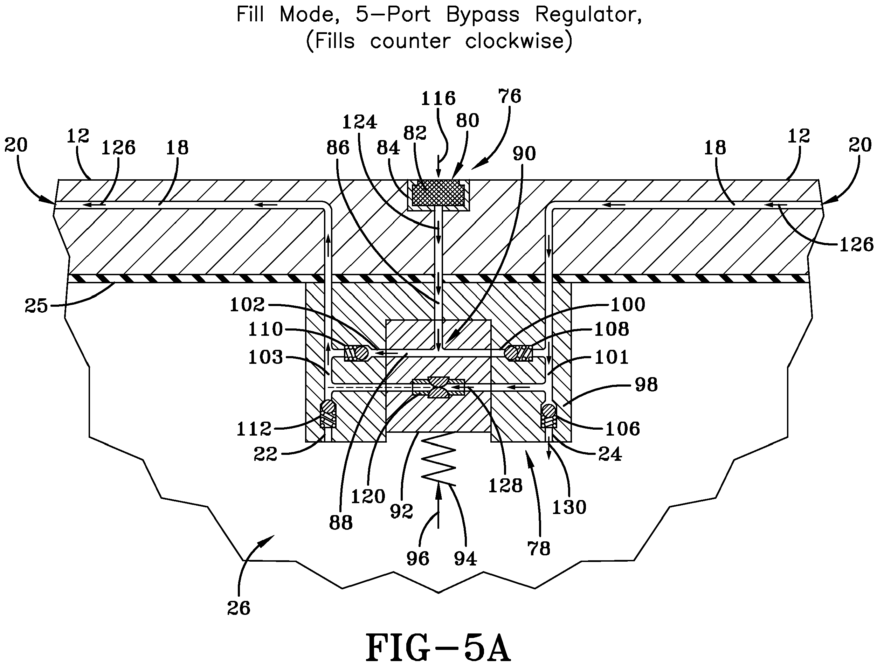

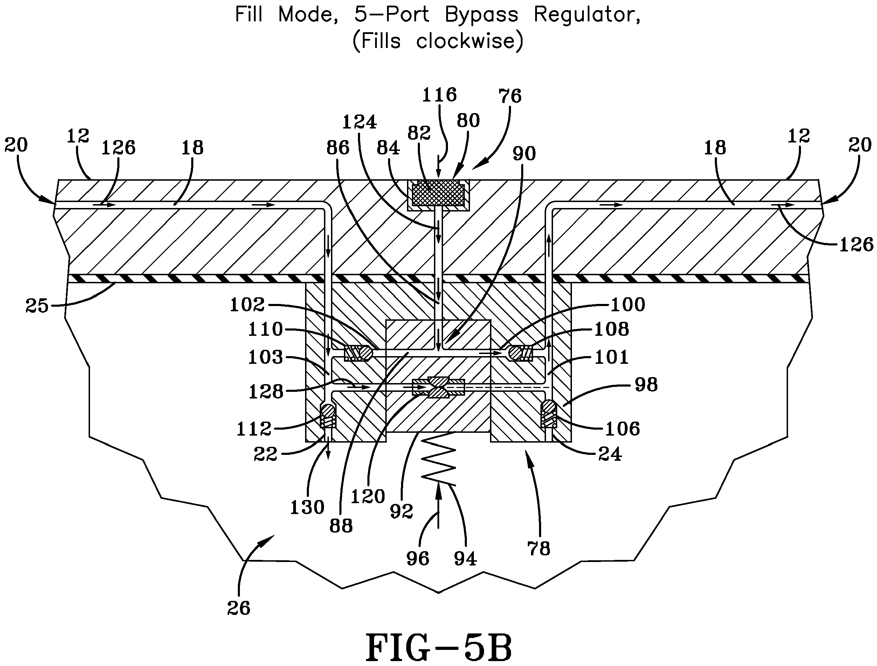

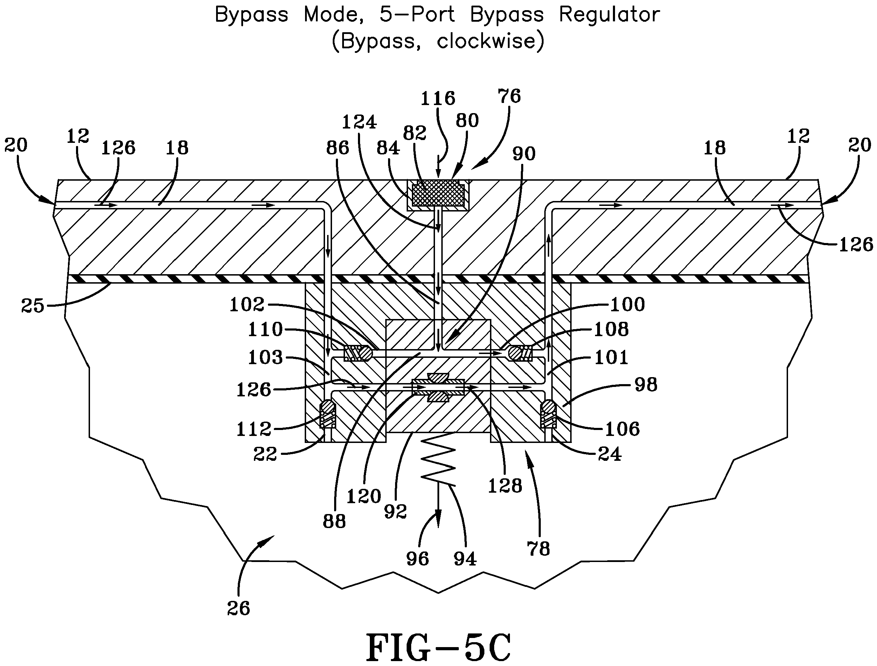

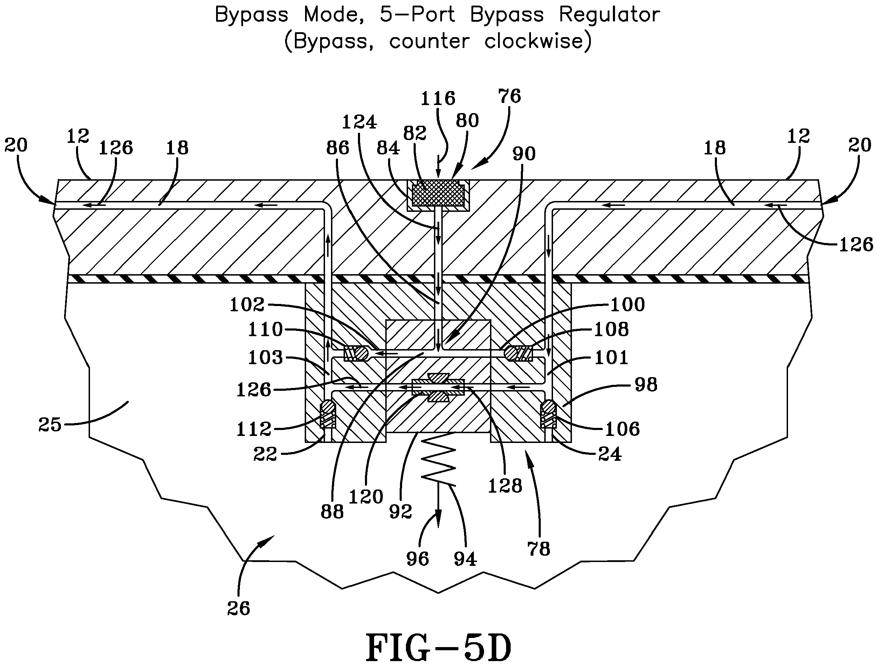

FIGS. 5A, 5B, 5C & 5D show another example of regulator valve assembly 78 modified by the inclusion of a bypass valve 120. The bypass valve 120 may be a pressure controlled valve connected to bypass the opening of the check valves 106, 112 when the pressure within the tire cavity 26 exceeds a P_{SET} or P_{REG} value. The bypass valve 120 may ensure that air cannot be introduced into the tire cavity 26 when the air pressure within the cavity is at or greater than the P_{SET} or P_{REG} pressure threshold.

The bypass valve 120 may conduct air in either direction when the pressure within the tire cavity 26 is at or greater than the P_{SET} or P_{REG} value, thereby bypassing air to the outlet valves 106, 112 and preventing the introduction of excessive air into the tire cavity. The bypass valve 120 may connect to the conduit 120 spanning the piston 92 and connecting to the conduits 101, 103 at opposite ends.

FIG. 5A shows a 5-port bypass regulator with the cavity pressure below the threshold P_{SET} or P_{REG}, the tire rotating in a clockwise direction, and fill air rotating about the passageway 20 in a counterclockwise direction. In the bypass regulator of FIGS. 5A, 5B, 5C & 5D, the piston 92 may not move between an aligned, open orientation relative to the conduits 100, 102 and a closed, misaligned, orientation, but may remain in alignment in all fill modes (e.g., fixed).

With reference to FIG. 5A, the cavity pressure is below the threshold P_{SET} or P_{REG}, causing the bypass valve 120 to close. With the bypass valve 120 closed, the operation of the regulator and air passageway 20 proceeds as discussed above in reference to FIG. 4B. FIG. 5A and FIG. 4B both represent a clockwise rotation of the tire, flow of air into (arrow 124) the tire cavity 26 through filter inlet port 80, and a counterclockwise flow of air (arrow 126) within passageway 20.

In FIG. 5B, for a counterclockwise rotation of the tire and a clockwise fill direction, the bypass valve 120 continues to remain closed so long as the cavity pressure remains below the threshold P_{SET} or P_{REG}. Air flow (arrow 128) along the bypass conduit is thereby blocked by the closed bypass valve 120. The air flow and fill direction in FIG. 5B thus proceeds as explained above with regard to the same analogous conditions of FIG. 4B operates. Air circulating in FIG. 5B in the clockwise direction acts to open the outlet valve 112 and pass air in the direction 130 into the tire cavity 26.

In FIG. 5C, with the cavity pressure at or greater than the P_{SET} or P_{REG}, air may circulate in the clockwise direction bypassing the outlet valves 106, 112 and passing instead through the open bypass valve 120. The outlet valves 106, 112 thus remain closed and none of the circulated air (arrow 126) will pass through the outlet 106, 112 and enter the tire cavity 26. FIG. 5D shows the operation of the bypass regulator during an opposite, clockwise rotation of the tire and a counterclockwise air flow path through the air passageway 20. As in FIG. 5C, the tire cavity pressure in FIG. 5D is greater than the threshold P_{SET} or P_{REG} and the bypass valve 126 is open and directing the counterclockwise air flow (direction arrow 126) through the bypass conduit, rather than through the outlet valves 106, 112. Air flow into the tire cavity 26 is thus precluded. The bypass regulator of FIGS. 5A, 5B, 5C & 5D thereby ensures that under no circumstances will air be forced into the tire cavity 26 when the pressure within the cavity is at or greater than the set threshold P_{SET} or P_{REG}.

From the foregoing, it will be appreciated that the peristaltic pump and regulator system provides the means for keeping the air pressure within the tire cavity 26 at a desired pressure level P_{SET} or P_{REG}, but at no greater pressure that the desired pressure level. The pump assembly 16 may include the elongate annular air passageway 20 enclosed within a bending region of the tire. The air passageway 20 may operatively close and open, segment by segment, as the bending region of the tire passes adjacent a rolling tire footprint to pump air along the air passageway. The pump assembly 16 may further include the air inlet port assembly 28 positioned to channel outside air into the air passageway 20 at an inlet junction (38 or 90). The pair of inline valves 62, 64 (or 108, 110) may direct inlet air in opposite directions into the air passageway 20. The pair of outlet valves 66, 68 (or 106, 112) may be positioned at a downstream side of a respective inline valve with the outlet valves directing a bi-directional flow from the downstream side of a respective inline valve therethrough and toward the tire cavity 26.

The inlet port assembly 28 may further extend the control conduit between an inlet air flow/air inlet portal and an upstream side of the inlet valves. The piston 44 may operate under the influence of the valve spring 48 to interrupt inlet air through the control junction 38 to the upstream side of the inlet valves when the air pressure within the tire cavity 26 is above the threshold air pressure level P_{SET} or P_{REG}. The inlet and outlet valves may selectively open with bi-directional air flow within the air passageway 20 dictated by direction in which the tire rotates.

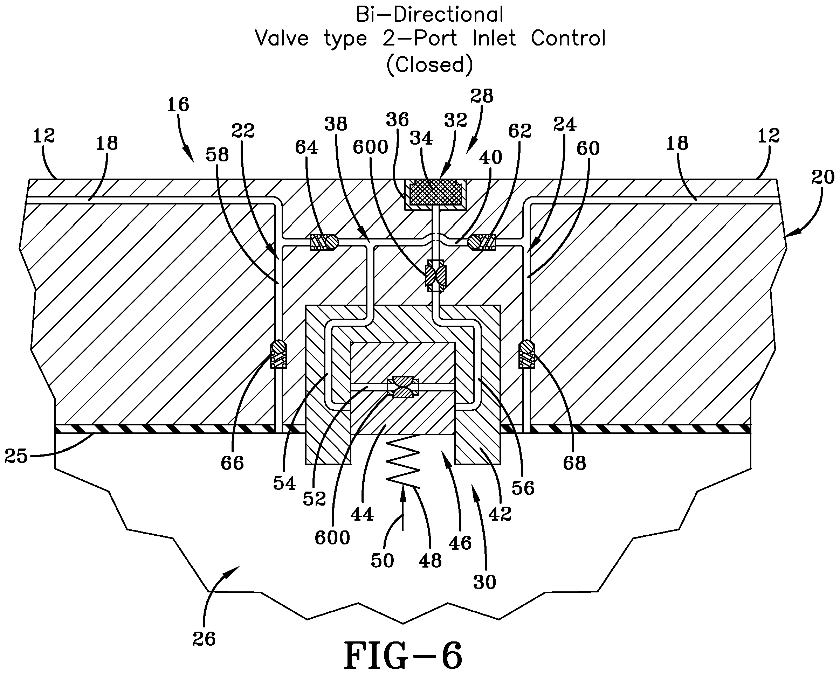

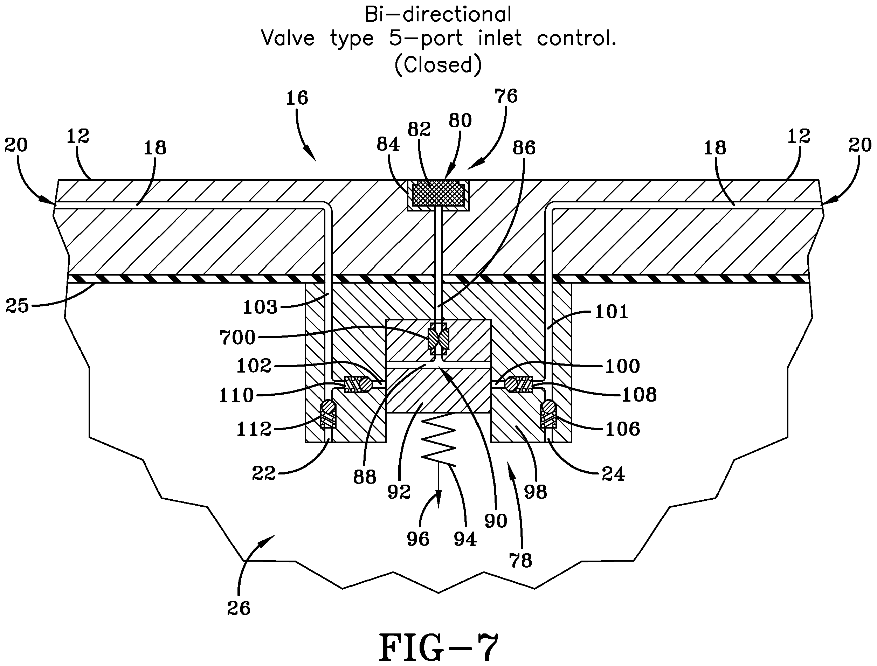

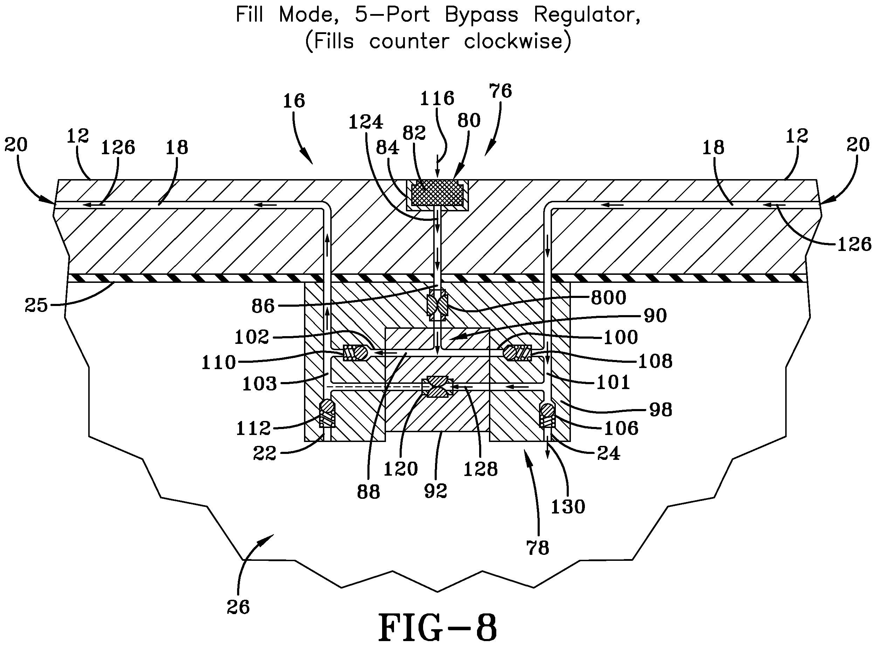

In accordance with the present invention, a preferably high pressure shut-off valve 600, 700, 800 for use with the above described assemblies 16 may further provide fail safe capability to prevent an over-inflation condition in the tire cavity 26. The shut-off valves 600, 700, 800 may be, for example, a diaphragm shut-off valve (e.g., utilizing a diaphragm stiffness and seal capability to block air passage when the tire cavity pressure is higher than pre-set maximum tire pressure P_{SET} or P_{REG}) or a miniature spring loaded actuator shut-off valve (e.g., utilizing spring stiffness and actuator seal capability to block air passage when the tire cavity pressure is higher than pre-set maximum tire pressure P_{SET} or P_{REG}). The high pressure shut-off valves 600, 700, 800 may be located in the inlet conduit inside the filter 34 (FIGS. 6-8) or in the inlet conduit for the pump assembly 16 (FIG. 6).

While the above representations of the subject invention are as indicated in FIGS. 3A, 3B &3C, FIGS 4A, 4B & 4C, FIGS. 5A, 5B, 5C & 5D, and FIGS. 6-8, the present invention is not limited to the examples shown. The four check valves used for directionality can be anywhere in the tire pumping channel 20, attached to the tire inner liner surface 25, attached to the surface of the regulator housing, or completely integrated into the regulator as shown. Such deviations are within the knowledge of those of ordinary skill in the art. Similarly, while the examples shown represent two-port and five-port regulator configurations, other examples may be substituted without departing from the scope of the present invention. Three and four port regulators may be substituted. It will further be noted that, in the regulator examples shown, the air flow direction within the regulator must always come through the inlet filter 34 and always follows opposite to the tire rotation outside the regulator. It will further be understood in the bypass regulator example, the bypass conduit connects the two check valves, outlet valves 106, 112, that send high pressure compressed air into the tire 10. During the fill mode, air may not flow through the bypass passageway so long as the air pressure within the tire cavity 26 is less than P_{SET} or P_{REG}. The air is thus directed to open the outlet check valves and send the air into the tire cavity 26. When the tire reaches the required pressure P_{SET} or P_{REG}, the air may flow through the bypass valve. The air is thus circulated about the passageway 20 and through the regulator bypass passageway and is not compressed. Overfill of the tire cavity 26 may also be prevented.

The reversible peristaltic tire and pump assembly 16 will work for any configuration of air pump passageway and for an angle of the passageway relative to the tire up to a 360 degree annular circumference. The system is functional for built-in air passageways or post cure attached tube-based passageways. The inline and outlet check valves may be integrated into the regulator housing design. Both bypass (third example) and inlet control (first and second examples) regulators may be used. Moreover, no dead volume(s) of air are created in the middle of the air flow path. Rather, the air flow path may be symmetric with the inlet and outlet exchanged interchangeably without compromising functionality.

## Claims

1. A tire and pump assembly, the assembly comprising:
a tire having a tire cavity (26), first and second sidewalls (12) extending from first and second tire bead regions, respectively, to a tire tread region (14);
an elongate preferably substantially annular air passageway (20) enclosed within a bending region of at least one of the sidewalls, the air passageway (20) operatively closing and opening, segment by segment, as the bending region of the sidewall (12) passes adjacent a rolling tire footprint to pump air along the air passageway (20);
an air inlet port assembly (28) coupled to, and in air flow communication with, the air passageway (20) at an inlet air passageway junction (38), the air inlet port assembly (28) being operable to channel inlet air from outside of the tire into the air passageway (20); **characterized in that** the assembly further comprises
a pair of substantially inline valves (62, 64) positioned on respective opposite sides of the inlet air passageway junction (38) in air flow communication with the inlet port assembly (28), the inline valves (62, 64) selectively opening in respective opposite directions and passing a flow of the inlet air from an upstream valve side to a downstream valve side and into the air passageway (20);
a pair of outlet valves (66, 68), each outlet valve (66, 68) positioned in air flow communication with a downstream side of a respective inline valve (62, 64), the valves selectively conducting a flow of the inlet air from the downstream side of a respective inline valve (62, 64) to the tire cavity (26); and
a shut-off valve (600, 700, 800) for preventing an over-inflation condition in the tire cavity (26).

2. The tire and pump assembly as set forth in claim 1 wherein the shut-off valve (600, 700, 800) includes a diaphragm for sealing the high pressure shut-off valve when the tire cavity pressure is higher than a pre-set maximum tire pressure.

3. The tire and pump assembly as set forth in claim 1 or 2 wherein the high pressure shut-off valve (600, 700, 800) includes a spring for sealing the shut-off valve when the tire cavity pressure is higher than a pre-set maximum tire pressure.

4. The tire and pump assembly as set forth in at least one of the previous claims wherein the shut-off valve (600, 700, 800) is located in an inlet conduit (86) for the pump assembly or in an inlet conduit (86) adjacent a filter (82) for inlet air.

5. The tire and pump assembly as set forth in at least one of the previous claims wherein the air passageway (20) extends annularly within a substantially circumferential enclosed position within a tire sidewall (12).

6. The tire and pump assembly as set forth in at least one of the previous claims wherein each of the outlet valves (66, 68) is positioned adjacent and in proximal relationship with the downstream side of a respective inline valve (62, 64).

7. The tire and pump assembly as set forth in at least one of the previous claims wherein the outlet valves (66, 68) are operative to open to conduct an outlet flow of air in a substantially radial direction to the tire cavity (26).

8. The tire and pump assembly as set forth in at least one of the previous claims wherein the inline and the outlet valves (62, 64, 66, 68) are operative to selectively open as dictated by alternative rotational directions of the tire.

9. The tire and pump assembly as set forth in at least one of the previous claims wherein the inlet port assembly (28) comprises an air inlet portal and an air pressure regulator (30), and wherein the air pressure regulator (30) is operative to selectively open and close the inline valves (62, 64) responsive to an air pressure level within the tire cavity (26).

10. The tire and pump assembly as set forth in at least one of the previous claims wherein the outlet valves (66, 68) are operative to open and close responsive to air pressure at respective downstream sides of the inline valves (62, 64).

11. The tire and pump assembly as set forth in at least one of the previous claims wherein the air pressure regulator (30) includes control valve means operative to prohibit the flow of inlet air into the air passageway (20) when the air pressure within the tire cavity (26) is above the a threshold air pressure level and, optionally, wherein the control valve means comprises a control conduit extending between and conducting an inlet air flow between the air inlet portal and the upstream side of the inline valves (62, 64), the control valve means optionally further comprising a control valve actuator for interrupting the inlet air flow through the control conduit to the inline valves (62, 64) when the air pressure within the tire cavity (26) is above the threshold air pressure level.

12. The tire and pump assembly of claim 11 wherein the control valve actuator is operative to move between an open position wherein air flow through the control conduit into the inline valves (62, 64) is uninterrupted and a closed position wherein air flow through the control conduit into the inline valves (62, 64) is interrupted.

13. The tire and pump assembly of claim 11 or 12 wherein the control valve actuator further comprises biasing means for biasing the valve actuator into the closed position when the air pressure within the tire cavity (26) is above the threshold air pressure level.

14. The tire and pump assembly of claim 11, 12 or 13 wherein the control conduit is serially positioned between the inlet portal and the upstream sides of the inline valves (62, 64).

15. The tire and pump assembly of at least one of the claims 11 to 14 wherein the valve actuator comprises a piston (44) seated within a valve housing cavity (46), the control conduit transversely extending across the piston (44) and reciprocally moving with the piston between the closed and open positions, the control conduit of the piston (44) in the closed position having a misaligned orientation with the upstream sides of the inline valves (62, 64) and the control conduit of the piston (44) in the open position having an aligned orientation with the upstream sides of the inline valves (62, 64).

## Patentansprüche

1. Reifen- und Pumpenanordnung, wobei die Anordnung Folgendes umfasst:
einen Reifen, der einen Reifenhohlraum (26), erste und zweite Seitenwände (12), die sich aus ersten beziehungsweise zweiten Reifenwulstbereichen zu einem Reifenlaufflächenbereich (14) erstrecken, aufweist;
einen länglichen, vorzugsweise im Wesentlichen ringförmigen Luftdurchgang (20), der innerhalb eines Biegebereichs von wenigstens einer der Seitenwände eingeschlossen ist, wobei der Luftdurchgang (20) sich segmentweise betriebsfähig schließt und öffnet, während der Biegebereich der Seitenwand (12) angrenzend an einer rollenden Reifenaufstandsfläche führt, um Luft entlang des Luftdurchgangs (20) zu pumpen;
eine Lufteinlassöffnungsanordnung (28), die mit dem Luftdurchgang (20) an einer Einlassluftdurchgangsverbindung (38) gekoppelt ist und mit diesem in Luftstromverbindung steht, wobei die Lufteinlassöffnungsanordnung (28) betriebsfähig ist, um Einlassluft von außerhalb des Reifens in den Luftdurchgang (20) zu leiten; **dadurch gekennzeichnet, dass** die Anordnung ferner Folgendes umfasst:
ein Paar von im Wesentlichen Inline-Ventilen (62, 64), die auf jeweils gegenüberliegenden Seiten der Einlassluftdurchgangsverbindung (38) in Luftstromverbindung mit der Einlassöffnungsanordnung (28) angeordnet sind, wobei sich die Inline-Ventile (62, 64) in jeweils entgegengesetzte Richtungen wahlweise öffnen und einen Strom der Einlassluft von einer stromaufwärtigen Ventilseite zu einer stromabwärtigen Ventilseite und in den Luftdurchgang (20) führen;
ein Paar von Auslassventilen (66, 68), wobei jedes Auslassventil (66, 68) in Luftstromverbindung mit einer stromabwärtigen Seite eines jeweiligen Inline-Ventils (62, 64) angeordnet ist, wobei die Ventile einen Strom der Einlassluft von der stromabwärtigen Seite eines jeweiligen Inline-Ventils (62, 64) zu dem Reifenhohlraum (26) wahlweise leiten; und
ein Absperrventil (600, 700, 800) zum Verhindern eines Überfüllzustands in dem Reifenhohlraum (26).

2. Reifen- und Pumpenanordnung nach Anspruch 1, wobei das Absperrventil (600, 700, 800) eine Membran zum Abdichten des Hochdruckabsperrventils beinhaltet, wenn der Reifenhohlraumdruck höher als ein voreingestellter maximaler Reifendruck ist.

3. Reifen- und Pumpenanordnung nach Anspruch 1 oder 2, wobei das Hochdruckabsperrventil (600, 700, 800) eine Feder zum Abdichten des Absperrventils beinhaltet, wenn der Reifenhohlraumdruck höher als ein voreingestellter maximaler Reifendruck ist.

4. Reifen- und Pumpenanordnung nach wenigstens einem der vorhergehenden Ansprüche, wobei sich das Absperrventil (600, 700, 800) in einer Einlassleitung (86) für die Pumpenanordnung oder in einer Einlassleitung (86) angrenzend an einen Filter (82) für Einlassluft befindet.

5. Reifen- und Pumpenanordnung nach wenigstens einem der vorhergehenden Ansprüche, wobei sich der Luftdurchgang (20) innerhalb einer im Wesentlichen umlaufenden umschlossenen Position innerhalb einer Reifenseitenwand (12) ringförmig erstreckt.

6. Reifen- und Pumpenanordnung nach wenigstens einem der vorhergehenden Ansprüche, wobei jedes der Auslassventile (66, 68) angrenzend und in proximaler Beziehung zu der stromabwärtigen Seite eines jeweiligen Inline-Ventils (62, 64) angeordnet ist.

7. Reifen und Pumpenanordnung nach wenigstens einem der vorhergehenden Ansprüche, wobei die Auslassventile (66, 68) betriebsfähig sind, um sich zu öffnen, um einen Auslassstrom von Luft in einer im Wesentlichen radialen Richtung zu dem Reifenhohlraum (26) zu leiten.

8. Reifen- und Pumpenanordnung nach wenigstens einem der vorhergehenden Ansprüche, wobei die Inline- und die Auslassventile (62, 64, 66, 68) betriebsfähig sind, um sich wahlweise zu öffnen, wie durch alternative Drehrichtungen des Reifens vorgegeben.

9. Reifen- und Pumpenanordnung nach wenigstens einem der vorhergehenden Ansprüche, wobei die Einlassöffnungsanordnung (28) ein Lufteinlassportal und einen Luftdruckregler (30) umfasst, und wobei der Luftdruckregler (30) betriebsfähig ist, um die Inline-Ventile (62, 64) als Reaktion auf einen Luftdruckwert innerhalb des Reifenhohlraums (26) wahlweise zu öffnen und zu schließen.

10. Reifen- und Pumpenanordnung nach wenigstens einem der vorhergehenden Ansprüche, wobei die Auslassventile (66, 68) betriebsfähig sind, um sich als Reaktion auf Luftdruck an den jeweiligen stromabwärtigen Seiten der Inline-Ventile (62, 64) zu öffnen und zu schließen.

11. Reifen- und Pumpenanordnung nach wenigstens einem der vorhergehenden Ansprüche, wobei der Luftdruckregler (30) ein Steuerventilmittel beinhaltet, das betriebsfähig ist, um den Strom von Einlassluft in den Luftdurchgang (20) zu verhindern, wenn der Luftdruck innerhalb des Reifenhohlraums (26) über dem Schwellenluftdruckpegel liegt, und, wobei das Steuerventilmittel eine Steuerleitung wahlweise umfasst, die sich zwischen dem Lufteinlassportal und der stromaufwärtigen Seite der Inline-Ventile (62, 64) erstreckt und einen Einlasslufstrom zwischen diesen leitet, wobei das Steuerventilmittel ferner einen Steuerventilstellantrieb zum Unterbrechen des Einlassluftstroms durch die Steuerleitung zu den Inline-Ventilen (62, 64) wahlweise umfasst, wenn der Luftdruck innerhalb des Reifenhohlraums (26) über dem Schwellenluftdruckpegel liegt.

12. Reifen- und Pumpenanordnung nach Anspruch 11, wobei der Steuerventilstellantrieb betriebsfähig ist, um sich zwischen einer offenen Position, wobei der Luftstrom durch die Steuerleitung in die Inline-Ventile (62, 64) nicht unterbrochen ist, und einer geschlossene Position zu bewegen, wobei der Luftstrom durch die Steuerleitung in die Inline-Ventile (62, 64) unterbrochen ist.

13. Reifen- und Pumpenanordnung nach Anspruch 11 oder 12, wobei der Steuerventilstellantrieb ferner ein Vorspannmittel zum Vorspannen des Ventilstellglieds in die geschlossene Position umfasst, wenn der Luftdruck innerhalb des Reifenhohlraums (26) über dem Schwellenluftdruckpegel liegt.

14. Reifen- und Pumpenanordnung nach wenigstens einem der Ansprüche 11, 12 oder 13, wobei die Steuerleitung zwischen dem Einlassportal und den stromaufwärtigen Seiten der Inline-Ventile (62, 64) in Reihe angeordnet ist.

15. Reifen- und Pumpenanordnung nach wenigstens einem der Ansprüche 11 bis 14, wobei der Ventilstellantrieb einen Kolben (44) umfasst, der innerhalb eines Ventilgehäusehohlraums (46) sitzt, wobei sich die Steuerleitung über den Kolben (44) quer erstreckt und sich mit dem Kolben zwischen der geschlossenen und der offenen Position wechselseitig bewegt, wobei die Steuerleitung des Kolbens (44) in der geschlossenen Position eine fehlausgerichtete Ausrichtung mit den stromaufwärtigen Seiten der Inline-Ventile (62, 64) aufweist und die Steuerleitung des Kolbens (44) in der offenen Position eine ausgerichtete Ausrichtung mit den stromaufwärtigen Seiten der Inline-Ventile (62, 64) aufweist.

## Revendications

1. Assemblage de bandage pneumatique et de pompe, l'assemblage comprenant :
un bandage pneumatique qui possède une cavité de bandage pneumatique (26), un premier et un deuxième flanc (12) qui s'étendent à partir d'une première et d'une deuxième zone faisant office de talon pour le bandage pneumatique, respectivement, jusqu'à une zone (14) faisant office de bande de roulement pour le bandage pneumatique ;
un passage pour l'air (20) allongé, de préférence essentiellement annulaire, logé au sein d'une zone de flexion d'au moins un des flancs, le passage pour l'air (20) se fermant et s'ouvrant de manière opérationnelle, segment par segment, lorsque la zone de flexion du flanc (12) passe par un endroit situé en position adjacente à une empreinte du bandage pneumatique en train de rouler dans le but de pomper de l'air le long du passage pour l'air (20) ;
un assemblage d'orifice d'entrée pour l'air (28) couplé au passage pour l'air (20) et mis en communication par écoulement d'air avec ce dernier, à une jonction (38) du passage pour l'air d'entrée, l'assemblage d'orifice d'entrée pour l'air (28) pouvant être actionné pour acheminer de l'air d'entrée à partir de l'extérieur du bandage pneumatique jusqu'à l'intérieur du passage pour l'air (20) ; **caractérisé en ce que** l'assemblage comprend en outre :
une paire de soupapes (62, 64) essentiellement en ligne, disposées sur les côtés opposés respectifs de la jonction (38) du passage pour l'air d'entrée, mises en communication par écoulement d'air avec l'assemblage d'orifice d'entrée (28), les soupapes en ligne (62, 64), s'ouvrant de manière sélective dans des directions opposées respectives et laissant passer un écoulement de l'air d'entrée à partir d'un côté de soupape situé en amont dans la direction d'un côté de soupape situé en aval et jusqu'à l'intérieur du passage pour l'air (20) ;
une paire de soupapes de sortie (66, 68), chaque soupape de sortie (66, 68) étant positionnée pour une mise en communication par écoulement d'air avec un côté aval d'une soupape en ligne respective (62, 64), les soupapes acheminant de manière sélective un écoulement de l'air d'entrée à partir du côté aval d'une soupape en ligne respective (62, 64) dans la direction de la cavité (26) du bandage pneumatique ; et
une soupape d'arrêt (600, 700, 800) destinée à empêcher un état de gonflage excessif dans la cavité (26) du bandage pneumatique.

2. Assemblage de bandage pneumatique et de pompe selon la revendication 1, dans lequel la soupape d'arrêt (600, 700, 800) englobe un diaphragme destiné à rendre étanche la soupape d'arrêt soumise à une haute pression, lorsque la pression qui règne dans la cavité du bandage pneumatique est supérieure à une pression maximale préétablie du bandage pneumatique.

3. Assemblage de bandage pneumatique et de pompe selon la revendication 1 ou 2, dans lequel la soupape d'arrêt (600, 700, 800) soumise à une haute pression englobe un ressort destiné à rendre étanche la soupape d'arrêt soumise à une haute pression, lorsque la pression qui règne dans la cavité du bandage pneumatique est supérieure à une pression maximale préétablie du bandage pneumatique.

4. Assemblage de bandage pneumatique et de pompe selon au moins une des revendications précédentes, dans lequel la soupape d'arrêt (600, 700, 800) est disposée dans un conduit d'entrée (86) pour l'assemblage de pompe ou dans un conduit d'entrée (86) en position adjacente à un filtre (82) pour l'air d'entrée.

5. Assemblage de bandage pneumatique et de pompe selon au moins une des revendications précédentes, dans lequel le passage pour l'air (20) s'étend en une configuration annulaire dans un endroit essentiellement circonférentiel situé au sein d'un flanc (12) du bandage pneumatique.

6. Assemblage de bandage pneumatique et de pompe selon au moins une des revendications précédentes, dans lequel chacune des soupapes de sortie (66, 68) est disposée en position adjacente au côté aval d'une soupape en ligne respective (62, 64) et en relation proximale par rapport audit côté.

7. Assemblage de bandage pneumatique et de pompe selon au moins une des revendications précédentes, dans lequel les soupapes de sortie (66, 68) peuvent être activées pour s'ouvrir dans le but d'acheminer un écoulement de sortie d'air dans une direction essentiellement radiale dans la direction de la cavité (26) du bandage pneumatique.

8. Assemblage de bandage pneumatique et de pompe selon au moins une des revendications précédentes, dans lequel les soupapes en ligne et les soupapes de sortie (62, 64, 66, 68) peuvent être activées pour s'ouvrir de manière sélective, l'ouverture étant dictée par des directions de rotation alternées du bandage pneumatique.

9. Assemblage de bandage pneumatique et de pompe selon au moins une des revendications précédentes, dans lequel l'assemblage d'orifice d'entrée (28) comprend un accès d'entrée pour l'air et un régulateur de la pression de l'air (30) ; et dans lequel le régulateur de la pression de l'air (30) peut être activé pour de manière sélective ouvrir et fermer les soupapes en ligne (62, 64) en réponse à un niveau de la pression de l'air au sein de la cavité (26) du bandage pneumatique.

10. Assemblage de bandage pneumatique et de pompe selon au moins une des revendications précédentes, dans lequel les soupapes de sortie (66, 68) peuvent être activées pour s'ouvrir et pour se fermer en réponse à la pression de l'air qui règne aux côtés respectifs des soupapes en ligne (62, 64) situés en aval.

11. Assemblage de bandage pneumatique et de pompe selon au moins une des revendications précédentes, dans lequel le régulateur de la pression de l'air (30) englobe un moyen faisant office de soupape de commande, qui peut être activé pour empêcher l'écoulement d'air d'entrée à l'intérieur du passage pour l'air (20) lorsque la pression de l'air qui règne au sein de la cavité (26) du bandage pneumatique est supérieure à un niveau seuil de la pression de l'air ; et, de manière facultative, dans lequel le moyen faisant office de soupape de commande comprend un conduit de commande qui s'étend entre l'accès d'entrée pour l'air et le côté des soupapes en ligne (62, 64) situé en amont et qui est destiné à acheminer un écoulement d'air d'entrée entre les deux éléments en question, le moyen faisant office de soupape de commande comprenant en outre, de manière facultative, un actionneur de la soupape de commande qui est destiné à interrompre l'écoulement de l'air d'entrée à travers le conduit de commande dans la direction des soupapes en ligne (62, 64) lorsque la pression de l'air qui règne au sein de la cavité (26) du bandage pneumatique est supérieure à un niveau seuil de la pression de l'air.

12. Assemblage de bandage pneumatique et de pompe selon la revendication 11, dans lequel l'actionneur de soupape de commande peut être activé pour se déplacer entre une position ouverte dans laquelle un écoulement d'air à travers le conduit de commande dans la direction des soupapes en ligne (62, 64) est ininterrompu et une position fermée dans laquelle un écoulement d'air à travers le conduit de commande dans la direction des soupapes en ligne (62, 64) est interrompu.

13. Assemblage de bandage pneumatique et de pompe selon la revendication 11 ou 12, dans lequel l'actionneur de la soupape de commande comprend en outre un moyen de mise en état de précontrainte destiné à la mise en état de précontrainte de l'actionneur de soupape dans la position fermée lorsque la pression de l'air qui règne au sein de la cavité (26) du bandage pneumatique est supérieure au niveau seuil de la pression de l'air.

14. Assemblage de bandage pneumatique et de pompe selon la revendication 11, 12 ou 13, dans lequel le conduit de commande est monté en série entre l'accès d'entrée et les côtés des soupapes en ligne (62, 64) situés en amont.

15. Assemblage de bandage pneumatique et de pompe selon au moins une des revendications 11 à 14, dans lequel l'actionneur de soupape comprend un piston (44) qui est logé au sein d'une cavité de logement (46) de la soupape, le conduit de commande s'étendant en direction transversale à travers le piston (44) et effectuant un mouvement de va-et-vient avec le piston entre les positions fermée et ouverte, le conduit de commande du piston (44) dans la position fermée possédant une orientation en décalage par rapport aux côtés des soupapes en ligne (62, 64), situés en amont, et le conduit de commande du piston (44), dans la position ouverte, possédant une orientation mise en alignement avec les côtés des soupapes en ligne (62, 64), situés en amont.
